(19) Europäisches Patentamt
European Patent Office
Office européen des brevets

(11) EP 3 916 023 A1

(12) EUROPEAN PATENT APPLICATION

(43) Date of publication:
**01.12.2021 Bulletin 2021/48**

(51) Int Cl.:
*C08F 4/659* (2006.01) *C08F 110/06* (2006.01)

(21) Application number: **20176798.5**

(22) Date of filing: **27.05.2020**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Borealis AG**
**1220 Vienna (AT)**

(72) Inventors:
- **WANG, Jingbo**
  **4021 Linz (AT)**
- **GAHLEITNER, Markus**
  **4021 Linz (AT)**
- **BERNREITNER, Klaus**
  **4021 Linz (AT)**
- **LESKINEN, Pauli**
  **06101 Porvoo (FI)**
- **NIEDERSUESS, Peter**
  **4021 Linz (AT)**
- **NUMMILA-PAKARINEN, Auli**
  **06850 Kullo (FI)**

(74) Representative: **Kador & Partner PartG mbB**
**Corneliusstraße 15**
**80469 München (DE)**

# (54) POLYPROPYLENE COATING COMPOSITION

(57) The present invention relates to use of a polypropylene composition comprising a polypropylene having
- a melt flow rate $MFR_2$ (230°C/2.16kg) measured according to ISO 1133 of 10 to 40 g/10 min,
- a melting temperature $T_m$ as determined by DSC according to ISO 11357 of 149 to 160 °C, and
- a molecular weight distribution MWD of 2.4 to 4.5 as determined by GPC,

for extrusion coating of an article, to a process for extrusion coating of an article and to an extrusion coated article.

**Fig. 1**

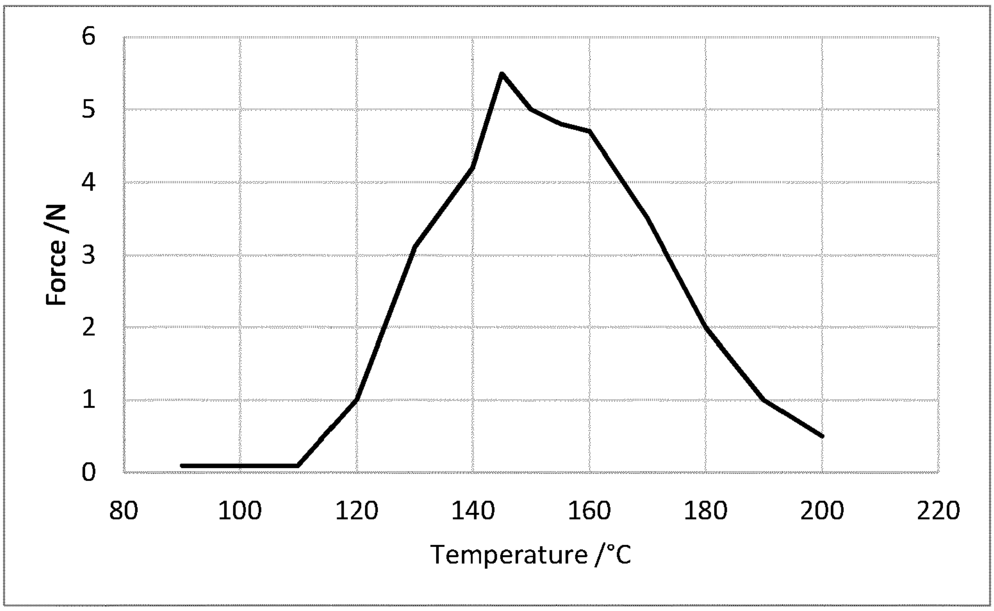


EP 3 916 023 A1

## Description

The present invention relates to the use of a polypropylene composition for extrusion coating, to a process for extrusion coating of an article in which the polypropylene composition is used and to a coated article having a layer of the polypropylene composition

In general, extrusion coating of substrates such as paper, paperboard, fabrics and metal foils with a thin layer of plastic is practiced on a large scale. The coating composition is extruded in a first step whereby the flux of molten polymeric material passes through a flat die to obtain a film having a thickness of a few microns. In the second step, i.e. the coating step, the film is laid on a support and passed on a cooling cylinder. Upon cooling, the polymer adheres to its support. High speed extrusion coating asks for relative high melt flow rates $MFR_2$ of 10 g/10min or higher. A description of the extrusion coating process is given, for instance, in Crystalline Olefin Polymers, Part II, by R.A.V. Raff and K.W. Doak (Interscience Publishers, 1964), pages 478 to 484, or in Vieweg, Schley and Schwarz: Kunststoff Handbuch, Band IV, Polyolefine, Carl Hanser Verlag (1969), 20, pages 412 to 420.

US 3,418,396 discloses polypropylene/polyethylene compositions for extrusion coating having high melt flow rates. The polypropylene used is disclosed to have a high degree of hexane extractables, which is undesirable especially for coating of articles for food applications. Furthermore, the presence of polyethylene decreases the ability of the compositions to withstand high temperatures. However, as in the field of some food applications such as retort pouches or some medical applications, a sterilization treatment is needed which requires a sufficient thermal stability of the extruded coating.

Polypropylenes can also be produced using single-site catalysts such as metallocene catalysts. However, the high melt flow rates required for extrusion coating are usually obtained through controlled rheology, i.e. by a treatment of the polypropylene after its production which increases the melt flow rate, such as by the use of peroxide or radiation (also called visbreaking).

WO 2012/109449 discloses controlled rheology formulations containing high melt strength polypropylene for extrusion coating, based on a radiation modification process.

However, these modifications lead to a significant degradation of the polypropylene which is responsible e.g. for the formation of gels so that the use of polypropylene compositions in high demand applications such as in the medical area is limited. Furthermore, visbreaking leads to the formation of double bonds at the ends of the polymer chains which are prone to oxidation so that unwanted taste and odour of the visbroken material is caused. This is undesirable for food applications.

Accordingly, there is still the need for improved propylene polymer compositions being suitable for extrusion coating for a broad variety of substrates with improved sealing and hot tack properties, which have low gel content, cause less taste and odour problems and are capable of withstanding high temperatures. To achieve these properties, the composition should not need the addition of processing aids such as LDPE or to use of rheology controlled materials.

The present invention therefore provides the use of a polypropylene composition comprising, or consisting of, a polypropylene having

- a melt flow rate $MFR_2$ (230°C/2.16kg) measured according to ISO 1133 of 10 to 40 g/10 min,
- a melting temperature $T_m$ as determined by DSC according to ISO 11357 of 149 to 160 °C, and
- a molecular weight distribution MWD of 2.4 to 4.5 as determined by GPC,

for extrusion coating of an article.

The polypropylene composition in the use of the invention is well suited for high speed extrusion coating, shows improved sealing properties, and complies with the further requirements for a good coating resin as stated above.

Preferably, the polypropylene composition does not contain any visbroken materials. Thus, in particular preferably the polypropylene is not a visbroken material.

Furthermore, preferably, the polypropylene is a propylene homopolymer, i.e. preferably it consists of propylene monomer units and up to 1 wt.% of other olefin monomers such as ethylene, more preferably it consists of propylene monomer units and up to 0.5 wt.% of other olefin monomers such as ethylene, and most preferably it consists of propylene monomer units.

The catalyst used for producing the polypropylene influences in particular the microstructure of the polymer. Accordingly, polypropylenes prepared by using a metallocene catalyst provide a different microstructure compared to those prepared by using Ziegler- Natta (ZN) catalysts. The most significant difference is the presence of regio-defects in metallocene-made polypropylenes which is not the case for polypropylenes made by Ziegler-Natta (ZN) catalysts.

The regio-defects of propylene polymers can be of three different types, namely 2,1-erythro (2, Ie), 2,1-threo (2, It) and 3,1 defects. A detailed description of the structure and mechanism of formation of regio defects in polypropylene

can be found in Chemical Reviews 2000,100(4), pages 1316-1327. These defects are measured using $^{13}C$ NMR as described in more detail below.

The term "2,1 regio defects" as used in the present invention defines the sum of 2,1-erythro regio-defects and 2,1-threo regio defects.

Preferably, the number of 2,1 and 3,1 regio defects in the polypropylene is from 0.01 to 1.2 mol%, more preferably from 0.4 to 0.85 mol%, and most preferably from to 0.45 to 0.8 mol% as measured by $^{13}C$ NMR.

Polypropylenes having a number of regio defects as required in the propylene composition of the invention are usually and preferably prepared in the presence of a single-site catalyst.

It is preferred that the polypropylene composition in the use of the invention comprises at least 80 wt.% of the polypropylene, more preferably at least 90 wt.% of the polypropylene and most preferably the polypropylene is the only polymeric component present in the composition, i.e. the polypropylene composition consists of the polypropylene and, optionally, contains one or more additives such as described herein below. The amount of additives, if present, is usually 5 wt.% or less, preferably 3 wt.% or less.

The polypropylene as contained in the inventive composition has preferably a melt flow rate $MFR_2$ (230°C/2.16kg) measured according to ISO 1133 of 15 to 37 g/10min, still more preferably of 20 to 35 g/10min.

The melting temperature $T_m$ as determined by DSC according to ISO 11357 of the polypropylene is preferably 150 to 158 °C, still more preferably is 153 to 157 °C.

Furthermore, the polypropylene has a comparatively small molecular weight distribution as determined by GPC. The polypropylene preferably has a molecular weight distribution MWD of 2.5 to 4.5, and still more preferably of 2.7 to 4.0.

Still further, the polypropylene has the advantage of having only a low amount of hexane extractables. Thus, it is preferred that the polypropylene has a hexane extractables content as measured according to the FDA test of less than 2.0 wt.%, more preferably of less than 1.5 wt.%.

In order to facilitate processing it is also desirable that the polypropylene has a suitable crystallization temperature even in absence of any nucleating agents.

Thus, preferably, the polypropylene has a crystallization temperature $T_c$ as determined by DSC according to ISO 11357 in the range of 100 to 130°C, more preferably in the range of 105°C to 125°C, like in the range of 110°C to 120°C.

The polypropylene preferably has a xylene cold soluble (XCS) fraction as determined according to ISO 16152 of from 0.05 to below 5 wt.%, more preferably of from 0.1 to 4 wt.%, and most preferably of 0.2 to 3 wt.%.

Furthermore, the polypropylene preferably has a flexural modulus as determined according to ISO 178 on injection moulded specimens of 1200 to 1800 MPa, more preferably in the range of 1250 to 1650 MPa, and most preferably in the range of 1300 to 1600 MPa.

Preferably, the polypropylene comprises, or consists of, two polymer fractions (PPH-1) and (PPH-2). The split between fractions (PPH-1) and (PPH-2) is preferably from 30:70 to 70:30, more preferably is from 45:55 to 65:35, and most preferably is from 55:45 to 60:40.

Optionally, a small fraction of prepolymer, usually below 5 wt.%, may also be present in the polypropylene.

Furthermore, it is preferred that (PPH-1) has a melt flow rate $MFR_2$ (230°C/2.16kg) measured according to ISO 1133 in the range of from 10 to 50 g/10min, more preferably 15 to 40 g/10min and most preferably 20 to 35 g/10min, and/or that (PPH-2) has a melt flow rate $MFR_2$ (230°C/2.16kg) measured according to ISO 1133 in the range of from 10 to 50 g/10min, more preferably 15 to 40 g/10min and most preferably 20 to 35 g/10min.

Preferably, the polypropylene is produced in the presence of a metallocene catalyst, which is preferably a metallocene catalyst comprising a complex in any one of the embodiments as described in WO2013/007650, WO2015/158790 and WO2018/122134.

To form an active catalytic species it is normally necessary to employ a cocatalyst as is well known in the art. Cocatalysts comprising one or more compounds of Group 13 metals, like organoaluminium compounds or boron containing cocatalysts or combinations therefrom used to activate metallocene catalysts are suitable for use in this invention.

In a preferred embodiment of the present invention a cocatalyst system comprising a boron containing cocatalyst, e.g. a borate cocatalyst and an aluminoxane cocatalyst is used.

Suitable co-catalysts are described in WO2013/007650, WO2015/158790 and WO2018/122134 and it is preferred that a cocatalyst in any one of the embodiments as described therein is used.

The catalyst system used to manufacture the polypropylene is ideally provided in solid particulate form supported on an external carrier.

The particulate support material used is silica or a mixed oxide such as silica-alumina. The use of a silica support is preferred.

Especially preferably the support is a porous material so that the complex may be loaded into the pores of the particulate support, e.g. using a process analogous to those described in WO94/14856, WO95/12622 and WO2006/097 497.

The preparation of the solid catalyst system is also described in WO2013/007650, WO2015/158790 and WO2018/122134 and it is preferred that the catalyst system is prepared according to any one of the embodiments

described therein.

The polypropylene in any of its embodiments comprising two fractions (PPH-1) and (PPH-2) is preferably produced in a process comprising the following steps:

a) polymerizing in a first reactor (R1) propylene obtaining polymer fraction (PPH-1),

b) transferring said polymer fraction (PPH-1) and unreacted monomers of the first reactor in a second reactor (R2),

c) feeding to said second reactor (R2) propylene,

d) polymerizing in said second reactor (R2) and in the presence of said polymer fraction (PPH-1) propylene to obtain polymer fraction (PPH-2) in an intimate mixture with (PPH-1) and hence the final polypropylene,

whereby preferably the polymerization takes place in the presence of a metallocene catalyst system in any one of the embodiments as described herein.

The polypropylene is, therefore, preferably prepared by polymerizing propylene by a sequential polymerization process comprising, or consisting of, at least two reactors connected in series in the presence of a metallocene catalyst.

Each of the two polymerization stages can be carried out in solution, slurry, fluidized bed, bulk or gas phase.

The term "polymerization reactor" shall indicate that the main polymerization takes place therein. Thus in case the process consists of one or two polymerization reactors, this definition does not exclude the option that the overall system comprises for instance a pre-polymerization step in a pre-polymerization reactor. The term "consist of" is only a closing formulation in view of the main polymerization reactors.

The term "sequential polymerization process" indicates that the polypropylene is produced in at least two reactors connected in series. Accordingly, such a polymerization system comprises at least a first polymerization reactor (R1) and a second polymerization reactor (R2), and optionally a third polymerization reactor (R3).

The first polymerization reactor (R1) is preferably a slurry reactor and can be any continuous or simple stirred batch tank reactor or loop reactor operating in bulk or slurry. Bulk means a polymerization in a reaction medium that comprises of at least 60 % (w/w) monomer. According to the present invention, the slurry reactor is preferably a (bulk) loop reactor.

The second polymerization reactor (R2) and the optional third polymerization reactor (R3) are preferably gas phase reactors (GPRs), i.e. a first gas phase reactor (GPR1) and a second gas phase reactor (GPR2). A gas phase reactor (GPR) according to this invention is preferably a fluidized bed reactor, a fast fluidized bed reactor or a settled bed reactor or any combination thereof.

A preferred multistage process is a "loop-gas phase"-process, such as developed by Borealis (known as BORSTAR® technology) described e.g. in patent literature, such as in EP 0 887 379, WO 92/12182, WO 2004/000899, WO 2004/111095, WO 99/24478, WO 99/24479 or in WO 00/68315.

A further suitable slurry-gas phase process is the Spheripol® process of Basell.

Preferably, in the process for producing the polypropylene as defined above the conditions for the first reactor (R1), i.e. the slurry reactor (SR), like a loop reactor (LR), of step (a) may be as follows:

- the temperature is within the range of 40°C to 110°C, preferably between 60°C and 100°C, more preferably between 65 and 95 °C,
- the pressure is within the range of 20 bar to 80 bar, preferably between 40 bar to 70 bar,
- hydrogen can be added for controlling the molar mass in a manner known per se.

Subsequently, the reaction mixture of the first reactor (R1) is transferred to the second reactor (R2), i.e. gas phase reactor (GPR1), where the conditions are preferably as follows:

- the temperature is within the range of 50°C to 130°C, preferably between 60°C and 100°C,
- the pressure is within the range of 5 bar to 50 bar, preferably between 15 bar to 40 bar,
- hydrogen can be added for controlling the molar mass in a manner known per se.

The polypropylene composition may comprise one or more usual additives, preferably in a total amount of from 0.01 up to 5.0 wt.%, more preferably from 0.05 to 3.0 wt.%, selected from the group comprising slip agents, anti-block

agents, UV stabilizers, antistatic agents, alpha-nucleating agents and antioxidants.

Slip agents migrate to the surface and act as lubricants polymer to polymer and polymer against metal rollers, giving reduced coefficient of friction (CoF) as a result. Examples are fatty acid amids, like erucamide (CAS No. 112-84-5), oleamide (CAS No. 301-02-0), stearamide (CAS No. 124-26-5) or combinations thereof.

Examples of antioxidant are sterically hindered phenols (such as CAS No. 6683-19-8, also sold as Irganox 1010 FF™ by BASF), phosphorous based antioxidants (such as CAS No. 31570-04-4, also sold as Hostanox PAR 24 (FF)™ by Clariant, or Irgafos 168 (FF)TM by BASF), sulphur based antioxidants (such as CAS No. 693- 36-7, sold as Irganox PS-802 FL™ by BASF), nitrogen-based antioxidants (such as 4,4'- bis(1,1'-dimethylbenzyl)diphenylamine), or antioxidant blends.

Examples for acid scavengers are calcium stearates, sodium stearates, zinc stearates, magnesium and zinc oxides, synthetic hydrotalcite (e.g. SHT, CAS No. 11097-59-9), lactates and lactylates, as well as calcium stearate (CAS No. 1592-23-0) and zinc stearate (CAS No. 557-05-1).

Common antiblocking agents are natural silica such as diatomaceous earth (such as CAS No.60676-86-0 (SuperfFloss™), CAS No. 60676-86-0 (SuperFloss E™), or CAS No. 60676-86-0 (Celite 499™)), synthetic silica (such as CAS No. 7631-86-9, CAS No. 7631-86-9, CAS No. 7631-86-9, CAS No. 7631-86-9, CAS No. 7631-86-9, CAS No. 7631-86-9, CAS No. 112926- 00-8, CAS No. 7631-86-9, or CAS No. 7631-86-9), silicates (such as aluminium silicate (Kaolin) CAS No. 1318-74-7, sodium aluminum silicate CAS No. 1344-00-9, calcined kaolin CAS No. 92704-41-1, aluminum silicate CAS No. 1327-36-2, or calcium silicate CAS No. 1344-95-2), synthetic zeolites (such as sodium calcium aluminosilicate hydrate CAS No. 1344-01-0, CAS No. 1344-01-0, or sodium calcium aluminosilicate, hydrate CAS No. 1344-01-0)

Suitable UV-stabilisers are, for example, Bis-(2,2,6,6-tetramethyl-4-piperidyl)-sebacate (CAS No. 52829-07-9, Tinuvin 770); 2-hydroxy-4-n-octoxy-benzophenone (CAS No. 1843-05-6, Chimassorb 81).

Alpha nucleating agents like sodium benzoate (CAS No. 532-32-1); a mixture of aluminium-hydroxy-bis[2,2'-methylene-bis(4,6-di-t-butylphenyl)phosphate] and lithium myristate (commercially available as Adekastab NA-21 of Adeka Palmarole, France) or 1,3:2,4-bis(3,4- dimethylbenzylidene)sorbitol (CAS No. 135861-56-2, commercially available as Millad 3988 of Milliken, USA) can also be added.

Suitable antistatic agents are, for example, glycerol esters (CAS No. 97593-29-8) or ethoxylated amines (CAS No. 71786-60-2 or 61791-31-9) or ethoxylated amides (CAS No. 204-393-1).

Usually these additives are added in quantities of 100-1,000 ppm for each single component.

Preferably at least an antioxidant is added to the composition of the invention.

Unless explicitly described otherwise, the description of the present invention is to be understood so that one or more of any of the above described preferred embodiments of the invention can be combined with the invention described in its most general features.

The present invention further relates to a process for extrusion coating of an article in which a polypropylene composition in any of the above described embodiments is coated onto an article by extrusion, and to a coated article having a coating layer comprising or consisting of a polypropylene composition in any one of the above described embodiments.

The extrusion coating process may be carried out using conventional extrusion coating techniques. Hence, the composition according to the present invention may be fed, typically in the form of pellets, to an extruding device. From the extruder the polymer melt is passed preferably through a flat die to the substrate to be coated. The coated substrate is cooled on a chill roll, after which it is passed to edge trimmers and wound up.

The die width typically depends on the size of the extruder used. Thus with 90 mm extruders the width may suitably be within the range of 600 to 1,200 mm, with 115 mm extruders from 900 to 2,500 mm, with 150 mm extruders from 1,000 to 4,000 mm and with 200 mm extruders from 3,000 to 5,000 mm. The line speed (draw-down speed) is preferably 75 m/min or more, more preferably at least 100 m/min. In most commercially operating machines the line speed is preferably more than 300 m/min or more than 500 m/min. Modern machines are designed to operate at lines speeds of up to 1,000 m/min, for instance 300 to 800 m/min.

The temperature of the polymer melt is typically between 240 and 330 °C. The polypropylene composition of the invention can be extruded onto the substrate as a monolayer coating or as an outer layer in a co-extrusion process. In a multilayer extrusion coating, a polymer layer structure as defined above and optionally the other polymeric layers may be co-extruded. It is possible to further perform ozone and/or corona treatment in a known way, if desired or necessary.

The main end-uses for extrusion coated products and articles obtained by using the composition according to the invention are in packaging applications, like liquid packaging for milk, juice, wine or other liquids, flexible packaging for snacks, confectionary, meat, cheese and medical products, rigid packaging like detergent cartons, cup and plate boards for oven or microwave use or in sterilizable food packaging, but also for photographic paper or industrial applications like paper reel and ream wraps, and technical laminates, preferably with sterilizable and/or retortable properties.

The article can be any article on which a coating can be applied by extrusion coating, like fibrous substrates,

such as paper, paperboard or Kraft paper or woven or non-woven fabrics, a metal foil, such as aluminium foil, or a plastic film, such as an oriented polypropylene film, PET film, PA film or cellophane film, a metallized film or combinations thereof.

Preferably, the article is paper, paperboard, a fibrous substrate, and/or a metal foil.

In the following, the measurement and determination methods for the parameters as used herein are given and the present invention is further illustrated by way of example and comparative example by reference to the figures, which show:

Fig. 1: Sealing curve of Inventive Example 1 (IE1)

Fig. 2: Sealing curve of Comparative Example 2 (CE2).

**Measurement and Determination Methods**

**a)** Measurement of melt flow rate $MFR_2$

$MFR_2$ (230°C) is measured according to ISO 1133 (230°C, 2.16 kg load).

**b)** Calculation of melt flow rate $MFR_2$ of the polymer fraction PPH-2:

$$MFR(A2) = 10^{\left[\frac{\log(MFR(A)) - w(A1)\, x \log(MFR(A1))}{w(A2)}\right]} \quad (II)$$

wherein

w(A1) is the weight fraction [in wt.%] of the polymer fraction PPH-1
w(A2) is the weight fraction [in wt.%] of the polymer fraction PPH-2,
MFR(A1) is the melt flow rate $MFR_2$ (230°C) [g/10min] of the polymer fraction PPH-1,
MFR(A) is the melt flow rate $MFR_2$ (230°C) [g/10min] of the entire polypropylene (PPH),
MFR(A2) is the calculated melt flow rate $MFR_2$ (230°C) [g/10min] of the polymer fraction PPH-2.

**c)** Quantification of microstructure by NMR spectroscopy

Quantitative nuclear-magnetic resonance (NMR) spectroscopy was further used to quantify the comonomer content and comonomer sequence distribution of the polymers. Quantitative $^{13}C\{^1H\}$ NMR spectra were recorded in the solution-state using a Bruker Advance III 400 NMR spectrometer operating at 400.15 and 100.62 MHz for $^1H$ and $^{13}C$ respectively. All spectra were recorded using a $^{13}C$ optimized 10 mm extended temperature probe head at 125°C using nitrogen gas for all pneumatics. Approximately 200 mg of material was dissolved in 3 ml of *1,2*-tetrachloroethane-$d_2$ (TCE-$d_2$) along with chromium-(III)-acetylacetonate ($Cr(acac)_3$) resulting in a 65 mM solution of relaxation agent in solvent (Singh, G., Kothari, A., Gupta, V., Polymer Testing 28 5 (2009), 475). To ensure a homogenous solution, after initial sample preparation in a heat block, the NMR tube was further heated in a rotatary oven for at least 1 hour. Upon insertion into the magnet the tube was spun at 10 Hz. This setup was chosen primarily for the high resolution and quantitatively needed for accurate ethylene content quantification. Standard single-pulse excitation was employed without NOE, using an optimized tip angle, 1 s recycle delay and a bi-level WALTZ16 decoupling scheme (Zhou, Z., Kuemmerle, R., Qiu, X., Redwine, D., Cong, R., Taha, A., Baugh, D. Winniford, B., J. Mag. Reson. 187 (2007) 225; Busico, V., Carbonniere, P., Cipullo, R., Pellecchia, R., Severn, J., Talarico, G., Macromol. Rapid Commun. 2007, 28, 1128). A total of 6144 (6k) transients were acquired per spectra.

Quantitative $^{13}C\{^1H\}$ NMR spectra were processed, integrated and relevant quantitative properties determined from the integrals using proprietary computer programs. All chemical shifts were indirectly referenced to the central methylene group of the ethylene block (EEE) at 30.00 ppm using the chemical shift of the solvent. This approach allowed comparable referencing even when this structural unit was not present. Characteristic signals corresponding to the incorporation of ethylene were observed Cheng, H. N., Macromolecules 17 (1984), 1950).

With characteristic signals corresponding to 2,1 erythro regio defects observed (as described in L. Resconi, L. Cavallo, A. Fait, F. Piemontesi, Chem. Rev. 2000, 100 (4), 1253, in Cheng, H. N., Macromolecules 1984, 17, 1950, and in W-J. Wang and S. Zhu, Macromolecules 2000, 33 1157) the correction for the influence of the regio defects on determined properties was required. Characteristic signals corresponding to other types of regio defects were not observed.

The comonomer fraction was quantified using the method of Wang et. al. (Wang, W-J., Zhu, S., Macromolecules 33 (2000), 1157) through integration of multiple signals across the whole spectral region in the $^{13}C\{^1H\}$ spectra. This method was chosen for its robust nature and ability to account for the presence of regio-defects when needed. Integral regions were slightly adjusted to increase applicability across the whole range of encountered comonomer contents.

For systems where only isolated ethylene in PPEPP sequences was observed the method of Wang et. al. was modified to reduce the influence of non-zero integrals of sites that are known to not be present. This approach reduced the overestimation of ethylene content for such systems and was achieved by reduction of the number of sites used to determine the absolute ethylene content to:

$$E = 0.5(S\beta\beta + S\beta\gamma + S\beta\delta + 0.5(S\alpha\beta + S\alpha\gamma))$$

Through the use of this set of sites the corresponding integral equation becomes:

$$E = 0.5(I_H + I_G + 0.5(I_C + I_D))$$

using the same notation used in the article of Wang et. al. (Wang, W-J., Zhu, S., Macromolecules 33 (2000), 1157). Equations used for absolute propylene content were not modified.

The mole percent comonomer incorporation was calculated from the mole fraction:

$$E\ [mol\%] = 100 * fE$$

The weight percent comonomer incorporation was calculated from the mole fraction:

$$E\ [wt\%] = 100 * (fE * 28.06) / ((fE * 28.06) + ((1-fE) * 42.08))$$

The comonomer sequence distribution at the triad level was determined using the analysis method of Kakugo et al. (Kakugo, M., Naito, Y., Mizunuma, K., Miyatake, T. Macromolecules 15 (1982) 1150). This method was chosen for its robust nature and integration regions slightly adjusted to increase applicability to a wider range of comonomer contents.

d) Xylene solubles (XCS, wt.%)

The xylene soluble (XS) fraction as defined and described in the present invention was determined in line with ISO 16152 as follows: 2.0 g of the polymer were dissolved in 250 ml p-xylene at 135°C under agitation. After 30 minutes, the solution was allowed to cool for 15 minutes at ambient temperature and then allowed to settle for 30 minutes at 25 +/- 0.5°C. The solution was filtered with filter paper into two 100 ml flasks. The solution from the first 100 ml vessel was evaporated in nitrogen flow and the residue dried under vacuum at 90°C until constant weight is reached. The xylene soluble fraction (percent) can then be determined as follows:

$$XS\% = (100*m*V0)/(m0*v);$$

m0 = initial polymer amount (g);

m = weight of residue (g);

V0 = initial volume (ml);

v = volume of analysed sample (ml).

**e)** DSC analysis, melting (Tm) and crystallization temperature (Tc)

Data were measured with a TA Instrument Q2000 differential scanning calorimetry (DSC) on 5 to 7 mg samples.

DSC is run according to ISO 11357 / part 3 /method C2 in a heat / cool / heat cycle with a scan rate of 10 °C/min in the temperature range of -30 to +225°C.

Crystallization temperature ($T_c$) and crystallization enthalpy ($H_c$) are determined from the cooling step, while melting temperature ($T_m$) and melting enthalpy ($H_m$) are determined from the second heating step.

**f)** Flexural Modulus

Flexural modulus is determined according to ISO 178 on 80x10x4 $mm^3$ test bars injection moulded in line with EN ISO 1873-2.

**g)** Hexane extractables

The hexane extractable fraction is determined according to FDA method (federal registration, title 21, Chapter 1, part 177, section 1520, s. Annex B) on cast films of 100 μm thickness produced on a monolayer cast film line with a melt temperature of 220°C and a chill roll temperature of 20°C. The extraction was performed at a temperature of 50°C and an extraction time of 30 min.

**h)** Molecular weight properties

Number average molecular weight (Mn), weight average molecular weight (Mw) and polydispersity (Mw/Mn) were determined by Gel Permeation Chromatography (GPC) according to the following method:
The weight average molecular weight Mw and the polydispersity (Mw/Mn), wherein Mn is the number average molecular weight and Mw is the weight average molecular weight) is measured by a method based on ISO 16014-1 :2003 and ISO 16014-4:2003. A Waters Alliance GPCV 2000 instrument, equipped with refractive index detector and online viscosimeter was used with 3 x TSK-gel columns (GMHXL-HT) from TosoHaas and 1 ,2,4- trichlorobenzene (TCB, stabilized with 200 mg/L 2,6-Di tert butyl-4-methyl-phenol) as solvent at 145 °C and at a constant flow rate of 1 mL/min. 216.5 μl of sample solution were injected per analysis. The column set was calibrated using relative calibration with 19 narrow MWD polystyrene (PS) standards in the range of 0.5 kg/mol to 11 500 kg/mol and a set of well characterized broad polypropylene standards. All samples were prepared by dissolving 5 - 10 mg of polymer in 10 mL (at 160 °C) of stabilized TCB (same as mobile phase) and keeping for 3 hours with continuous shaking prior sampling in into the GPC instrument.

**h)** Sealing behavior

The sealing behavior of the coatings was determined by measuring the hot tack force as follows:
The maximum hot-tack force, i.e. the maximum of a force/temperature diagram was determined and reported. Hot tack measurements were made with J&B hot tack tester following the method ASTM F 1921. The standard requires that the samples have to be cut into 15 mm slices in width. The samples are placed into the hot tack testing machine in vertical direction both ends attached to a mechanical lock. Then the tester seals and pulls out the hot seal and the resisting force is measured.

The sealing parameters were:

| | |
|---|---|
| Seal Pressure: | 1.5 $N/mm^2$ |
| Seal Time: | 0.5 sec |
| Cool time: | 0.20 sec |
| Peel Speed: | 200 mm/sec |
| Width: | 15.0 mm |

## Examples

A polypropylene in accordance with the invention (Inventive Example 1, IE1), using a single-site metallocene catalyst was prepared as follows:

Catalyst system IE1:

Metallocene (MC1) (rac-anti-dimethylsilandiyl(2-methyl-4-phenyl-5-methoxy-6-tert-butyl-indenyl)(2-methyl-4-(4-tert-butylphenyl)indenyl)zirconium dichloride)

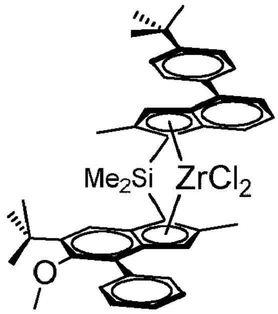

was synthesized according to the procedure as described in WO 2013/007650, E2.

A MAO-silica support was prepared as follows: A steel reactor equipped with a mechanical stirrer and a filter net was flushed with nitrogen and the reactor temperature was set to 20 °C. Next silica grade DM-L-303 from AGC Si-Tech Co, pre-calcined at 600 °C (7.4 kg) was added from a feeding drum followed by careful pressuring and depressurising with nitrogen using manual valves. Then toluene (32 kg) was added. The mixture was stirred for 15 min. Next 30 wt.% solution of MAO in toluene (17.5 kg) from Lanxess was added via feed line on the top of the reactor within 70 min. The reaction mixture was then heated up to 90°C and stirred at 90 °C for additional two hours. The slurry was allowed to settle and the mother liquor was filtered off. The MAO treated support was washed twice with toluene (32 kg) at 90°C, following by settling and filtration. The reactor was cooled off to 60°C and the solid was washed with heptane (32.2 kg). Finally MAO treated SiO2 was dried at 60° under nitrogen flow for 2 hours and then for 5 hours under vacuum (-0.5 barg) with stirring. MAO treated support was collected as a free-flowing white powder found to contain 12.6% Al by weight.

The final catalyst system was prepared as follows: 30 wt.% MAO in toluene (2.2 kg) was added into a steel nitrogen blanked reactor via a burette at 20 °C. Toluene (7 kg) was then added under stirring. Metallocene MC1 (286 g) was added from a metal cylinder followed by flushing with 1 kg toluene. The mixture was stirred for 60 minutes at 20 °C. Trityl tetrakis(pentafluorophenyl) borate (336 g) was then added from a metal cylinder followed by a flush with 1 kg of toluene. The mixture was stirred for 1 h at room temperature. The resulting solution was added to a stirred cake of MAO-silica support prepared as described above over 1 hour. The cake was allowed to stay for 12 hours, followed by drying under N2 flow at 60°C for 2h and additionally for 5 h under vacuum (-0.5 barg) under stirring. Dried catalyst was sampled in the form of pink free flowing powder containing 13.9 wt% Al and 0.26 wt% Zr.

The polymerization for preparing the inventive polymer of IE1 was performed in a Borstar pilot plant with a 2-reactor set-up (loop - gas phase reactor (GPR 1)) and a pre-polymerizer, using the catalyst system as described above.

In Table 1, the polymerization conditions for IE1 and the final properties of the resins of IE1 and CE2 are given.

**Table 1:**

| | | IE1 | CE2 |
|---|---|---|---|
| | | | |
| **Prepolymerizer** | | | |
| Temperature | °C | 25 | |
| Pressure | kPa | 5153 | |
| **Loop** | | | |
| Temperature | °C | 75 | |
| Pressure | kPa | 5400 | |
| Feed H2/C3 | mol/kmol | 0.48 | |
| Split | wt% | 62 | |
| MFR | g/10min | 26.2 | |
| **GPR1** | | | |
| Temperature | °C | 80 | |

(continued)

| | | | |
|---|---|---|---|
| **GPR1** | | | |
| H2/C3 | mol/kmol | 3 | |
| Split | wt% | 38 | |
| MFR (final PP) | g/10min | 27 | |
| | | | |
| **Final polymer** | | | |
| MFR | g/10min | 27 | 27 |
| XCS | wt% | 0.9 | 4.5 |
| Tm | °C | 153 | 158 |
| Tc | °C | 115 | 111 |
| 2,1e | mol% | 0.7 | 0 |
| 2,1t | mol-% | 0 | 0 |
| 3,1 | mol-% | 0 | 0 |
| FM | MPa | 1450 | 1403 |
| MWD | | 3.4 | 4.7 |

The resin of CE2 corresponds to the propylene homopolymer as prepared with a Ziegler-Natta catalyst and used in the inventive examples of WO2017/118612, to which it is referred.

The polymer powders were compounded in a co-rotating twin-screw extruder Coperion ZSK 57 at 220°C0.1 wt% antioxidant (Irgafos 168FF); 0.1 wt% of a sterically hindered phenol (Irganox 1010FF); 0.05 wt% of Ca-stearat).

Using the compounded resins of IE1 and CE2 as described above, coating layer on paper was prepared by extrusion coating of the resins as follows:

Extrusion coating runs were made on Beloit co-extrusion coating line. It had Peter Cloeren's EBR die and a five layer feed block. The die width is 1000 mm and optimal working width is 600-800 mm. Designed top speed of the line is 1000 m/min, during production of test samples line speed was maintained at 150 m/min.

In the coating line above a UG kraft paper 70 g/$m^2$ was coated with a co-extruded structure, which was composed of the resin of IE1 or CE2 (Layer 1, 9 g/$m^2$), as disclosed above, and a Layer 2 (9 g/$m^2$) of polypropylene resin WG341C (commercially available from Borealis, density: 910 kg/$m^3$, melt Flow Rate (230 °C/2.16 kg): 25 g/10min, melting temperature (DSC) 161 °C, Vicat softening temperature A, (10 N) 132 °C) attached to the paper substrate.

The temperature of the polymer melt was set to 290 °C and the extruders' temperature profile was 200-240-290-290 °C. The chill roll was matt and temperature of its surface was 15 °C. Used die opening was 0.65 mm and nip distance was 180 mm. Melt film touched the substrate for the first time +10 mm from nip to substrate side. Pressure of the pressure roll was 3.0 kp/cm<2>. The line speed was 150 m/min.

Hot tack of each sample was established by testing hot tack forces with temperatures ranging from 90°C to temperature where the measured hot tack force was below 1 N. The standard requires at least 3 parallel measurements to be done. The temperature was increased in steps of 10 or 5 °C.

The results of the hot tack force measurements of the coatings of IE1 and CE 2 are given in Fig. 1 and 2, respectively.

SIT and SET values are obtained from hot tack measurement. In the present invention the lowest sealing temperature (SIT) is defined to be the temperature (°C), where hot-tack strength is reaching 2 N, and highest sealing temperature (SET) is the temperature (°C), where hot-tack strength is still at 2 N.

Maximum hot-tack strength is defined to be the highest strength (N) level over 20 °C interval of sealing range.

As can be seen from the data in Figures 1 and 2, the coating prepared in IE1 provides lower sealing temperature and higher sealing force.

## Claims

1. Use of a polypropylene composition comprising a polypropylene having

- a melt flow rate $MFR_2$ (230°C/2.16kg) measured according to ISO 1133 of 10 to 40 g/10 min,
- a melting temperature $T_m$ as determined by DSC according to ISO 11357 of 149 to 160 °C, and
- a molecular weight distribution MWD of 2.4 to 4.5 as determined by GPC,

for extrusion coating of an article.

**2.** Use according to claim 1 wherein the polypropylene is a propylene homopolymer.

**3.** Use according to claim 1 or 2 wherein the polypropylene has a number of 2,1 and 3,1 regio defects of from 0.01 to 1.2 mol%, preferably from 0.4 to 0.85 mol%, and more preferably from to 0.45 to 0.8 mol% as measured by $^{13}C$ NMR,

**4.** Use according to any one of the preceding claims wherein the polypropylene has been produced in the presence of a single-site catalyst

**5.** Use according to any one of the preceding claims wherein the polypropylene has a melt flow rate $MFR_2$ of 15 to 37 g/10min and/or a melting temperature $T_m$ as determined by DSC according to ISO 11357 of 150 to 158 °C.

**6.** Use according to any one of the preceding claims wherein the polypropylene has a melt flow rate $MFR_2$ of 20 to 35 g/10min and/or a melting temperature $T_m$ as determined by DSC according to ISO 11357 of 153 to 157 °C.

**7.** Use according to any one of the preceding claims wherein the polypropylene has a MWD of 2.5 to 4.5 as determined by GPC and/or a xylene cold soluble (XCS) fraction as determined according to ISO 16152 of from 0.05 to below 5 wt.%.

**8.** Use according to any one of the preceding claims wherein the polypropylene has a MWD of 2.7 to 4.0 as determined by GPC and/or a xylene cold soluble (XCS) fraction as determined according to ISO 16152 of from 0.1 to 4 wt.%.

**9.** Use according to any one of the preceding claims wherein the polypropylene has a crystallization temperature $T_c$ as determined by DSC according to ISO 11357 in the range of 100 to 130°C and/or a flexural modulus as determined according to ISO 178 on injection moulded specimens of 1200 to 1800 MPa.

**10.** Use according to any one of the preceding claims wherein the polypropylene has a crystallization temperature $T_c$ as determined by DSC according to ISO 11357 in the range of 105 to 125°C and/or a flexural modulus as determined according to ISO 178 on injection moulded specimens of 1250 to 1650 MPa.

**11.** Use according to any one of the preceding claims wherein the polypropylene has a crystallization temperature $T_c$ as determined by DSC according to ISO 11357 in the range of 110 to 120°C and/or a flexural modulus as determined according to ISO 178 on injection moulded specimens of 1300 to 1600 MPa.

**12.** Use according to any one of the preceding claims wherein the polypropylene comprises two polymer fractions (PPH-1) and (PPH-2) wherein the split between fractions (PPH-1) and (PPH-2) is from 30:70 to 70:30, preferably is from 45:55 to 65:35, and more preferably is from 55:45 to 60:40.

**13.** A process for extrusion coating of an article in which a polypropylene composition comprising a polypropylene having

- a melt flow rate $MFR_2$ (230°C/2.16kg) measured according to ISO 1133 of 10 to 40 g/10 min,
- a melting temperature $T_m$ as determined by DSC according to ISO 11357 of 149 to 160 °C, and
- a molecular weight distribution MWD of 2.4 to 4.5 as determined by GP,

is coated onto an article by extrusion.

**14.** Use or process according to any one of the preceding claims wherein the article is paper, paperboard, a fibrous substrate, and/or a metal foil.

**15.** A coated article having a coating layer of a polypropylene composition comprising polypropylene having

- a melt flow rate $MFR_2$ (230°C/2.16kg) measured according to ISO 1133 of 10 to 40 g/10 min,
- a melting temperature $T_m$ as determined by DSC according to ISO 11357 of 149 to 160 °C, and

- a molecular weight distribution MWD of 2.4 to 4.5 as determined by GPC.

Fig. 1

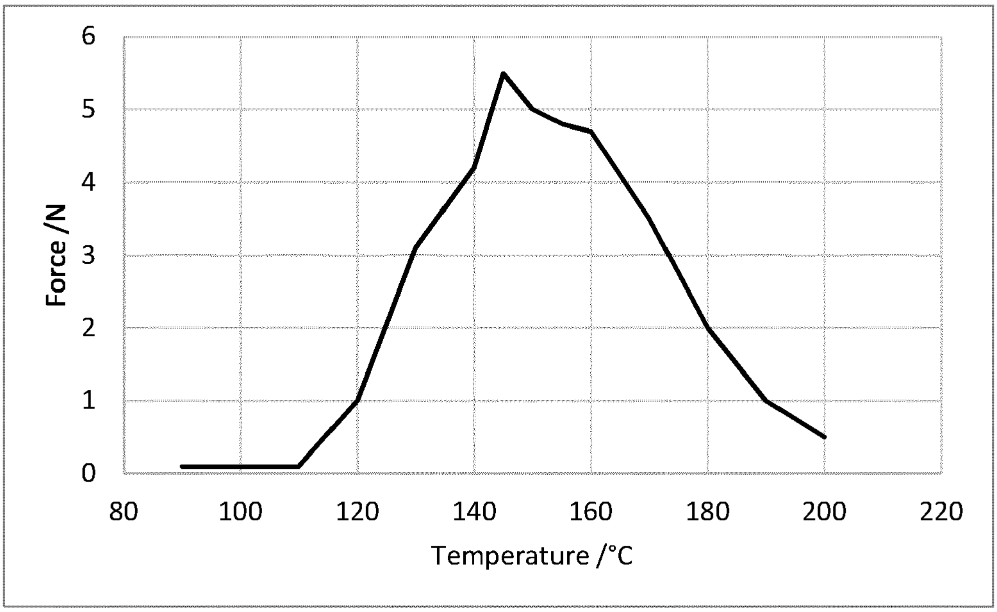

Fig. 2

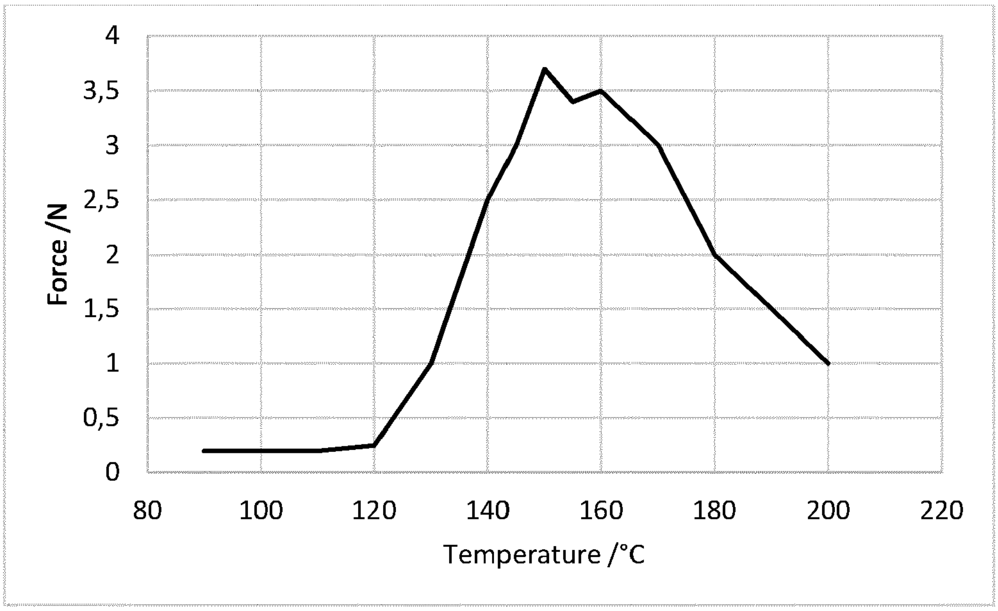
Force /N
4
3,5
3
2,5
2
1,5
1
0,5
0
80
100
120
140
160
180
200
220
Temperature /°C

Europäisches Patentamt
European Patent Office
Office européen des brevets

# EUROPEAN SEARCH REPORT

Application Number
EP 20 17 6798

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 892 264 A1 (BOREALIS TECH OY [FI]) 27 February 2008 (2008-02-27)<br>* Example 4; IE1 * | 1-15 | INV.<br>C08F4/659<br>C08F110/06 |
| A | EP 2 978 782 A1 (BOREALIS AG [AT]) 3 February 2016 (2016-02-03)<br>* claims *<br>* examples * | 1-15 | |
| A | EP 3 033 389 A1 (BOREALIS AG [AT]) 22 June 2016 (2016-06-22)<br>* examples *<br>* tables 2b, 3 * | 1-15 | |

TECHNICAL FIELDS SEARCHED (IPC)

C08F

The present search report has been drawn up for all claims

1

| Place of search | Date of completion of the search | Examiner |
|---|---|---|
| Munich | 19 October 2020 | Thomas, Dominik |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO. EP 20 17 6798

This annex lists the patent family members relating to the patent documents cited in the above-mentioned European search report. The members are as contained in the European Patent Office EDP file on
The European Patent Office is in no way liable for these particulars which are merely given for the purpose of information.

19-10-2020

| Patent document cited in search report | Publication date | Patent family member(s) | Publication date |
|---|---|---|---|
| EP 1892264 A1 | 27-02-2008 | BR PI0715826 A2 | 23-07-2013 |
| | | CN 101506296 A | 12-08-2009 |
| | | EA 200970222 A1 | 28-08-2009 |
| | | EP 1892264 A1 | 27-02-2008 |
| | | EP 1967547 A1 | 10-09-2008 |
| | | KR 20090023426 A | 04-03-2009 |
| | | KR 20110122772 A | 10-11-2011 |
| | | US 2009169907 A1 | 02-07-2009 |
| | | WO 2008022803 A2 | 28-02-2008 |
| EP 2978782 A1 | 03-02-2016 | AU 2014243188 A1 | 20-08-2015 |
| | | CN 105143286 A | 09-12-2015 |
| | | EP 2978782 A1 | 03-02-2016 |
| | | ES 2651839 T3 | 30-01-2018 |
| | | KR 20150126682 A | 12-11-2015 |
| | | US 2016060371 A1 | 03-03-2016 |
| | | WO 2014154610 A1 | 02-10-2014 |
| EP 3033389 A1 | 22-06-2016 | CN 105452364 A | 30-03-2016 |
| | | EP 3033389 A1 | 22-06-2016 |
| | | ES 2651456 T3 | 26-01-2018 |
| | | JP 6216887 B2 | 18-10-2017 |
| | | JP 2016528351 A | 15-09-2016 |
| | | KR 20160041979 A | 18-04-2016 |
| | | RU 2016107767 A | 19-09-2017 |
| | | US 2016280899 A1 | 29-09-2016 |
| | | WO 2015022127 A1 | 19-02-2015 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 3418396 A
- WO 2012109449 A
- WO 2013007650 A
- WO 2015158790 A
- WO 2018122134 A
- WO 9414856 A
- WO 9512622 A
- WO 2006097497 A
- EP 0887379 A
- WO 9212182 A
- WO 2004000899 A
- WO 2004111095 A
- WO 9924478 A
- WO 9924479 A
- WO 0068315 A
- WO 2017118612 A


### Non-patent literature cited in the description


- **R.A.V. RAFF ; K.W. DOAK.** Crystalline Olefin Polymers. Interscience Publishers, 1964, 478-484
- Polyolefine. **VIEWEG, SCHLEY ; SCHWARZ.** Kunststoff Handbuch. Carl Hanser Verlag, 1969, vol. IV, 412-420
- *Chemical Reviews,* 2000, vol. 100 (4), 1316-1327
- *CHEMICAL ABSTRACTS,* 112-84-5
- *CHEMICAL ABSTRACTS,* 301-02-0
- *CHEMICAL ABSTRACTS,* 124-26-5
- *CHEMICAL ABSTRACTS,* 6683-19-8
- *CHEMICAL ABSTRACTS,* 31570-04-4
- *CHEMICAL ABSTRACTS,* 693- 36-7
- *CHEMICAL ABSTRACTS,* 11097-59-9
- *CHEMICAL ABSTRACTS,* 1592-23-0
- *CHEMICAL ABSTRACTS,* 557-05-1
- *CHEMICAL ABSTRACTS,* 60676-86-0
- *CHEMICAL ABSTRACTS,* 7631-86-9
- *CHEMICAL ABSTRACTS,* 112926- 00-8
- *CHEMICAL ABSTRACTS,* 1318-74-7
- *CHEMICAL ABSTRACTS,* 1344-00-9
- *CHEMICAL ABSTRACTS,* 92704-41-1
- *CHEMICAL ABSTRACTS,* 1327-36-2
- *CHEMICAL ABSTRACTS,* 1344-95-2
- *CHEMICAL ABSTRACTS,* 1344-01-0
- *CHEMICAL ABSTRACTS,* 52829-07-9
- *CHEMICAL ABSTRACTS,* 1843-05-6
- *CHEMICAL ABSTRACTS,* 532-32-1
- *CHEMICAL ABSTRACTS,* 135861-56-2
- *CHEMICAL ABSTRACTS,* 97593-29-8
- *CHEMICAL ABSTRACTS,* 71786-60-2 or 61791-31-9
- *CHEMICAL ABSTRACTS,* 204-393-1
- **SINGH, G. ; KOTHARI, A. ; GUPTA, V.** *Polymer Testing,* 2009, vol. 28 (5), 475
- **ZHOU, Z. ; KUEMMERLE, R. ; QIU, X. ; REDWINE, D. ; CONG, R. ; TAHA, A. ; BAUGH, D. ; WINNIFORD, B.** *J. Mag. Reson,* 2007, vol. 187, 225
- **BUSICO, V. ; CARBONNIERE, P. ; CIPULLO, R. ; PELLECCHIA, R. ; SEVERN, J. ; TALARICO, G.** *Macromol. Rapid Commun.,* 2007, vol. 28, 1128
- **CHENG, H. N.** *Macromolecules,* 1984, vol. 17, 1950
- **L. RESCONI ; L. CAVALLO ; A. FAIT ; F. PIEMONTESI.** *Chem. Rev.,* 2000, vol. 100 (4), 1253
- **W-J. WANG ; S. ZHU.** *Macromolecules,* 2000, vol. 33, 1157
- **WANG, W-J. ; ZHU, S.** *Macromolecules,* 2000, vol. 33, 1157
- **KAKUGO, M. ; NAITO, Y. ; MIZUNUMA, K. ; MIYATAKE, T.** *Macromolecules,* 1982, vol. 15, 1150